# EUROPEAN PATENT APPLICATION

(11) **EP 3 165 855 A1**
(43) Date of publication of application: **10.05.2017**
(21) Application number: 16155128.8
(22) Date of filing: 10.02.2016
(51) Int. Cl.: F25D 3/10, F25D 21/08, B05B 1/24

(54) **CRYOGEN INJECTION APPARATUS AND CORRESPONDING METHOD**

(30) Priority: 04.11.2015 US 201514931898
(71) Applicant: Linde Aktiengesellschaft, 80331 München (DE)
(72) Inventor: NEWMAN, Michael D., Hillsborough, NJ 08844 (US); KILBURN, Thomas Edward, Pennsburg, PA 18073 (US)
(74) Representative: Hofmann, Andreas

(57) **Abstract**

In order to overcome the limitations and problems that earlier apparatus and methods have experienced, a cryogen injection apparatus (10) for injecting a cryogenic substance (15) into a blender or mixer is proposed, said apparatus (10) comprising:
- at least one nozzle (14) constructed for being in fluid communication with an interior of the blender or mixer; and
- an electric heat transfer member (16), in particular an electric heat sink member, in contact with the at least one nozzle (14) for electrically heating said at least one nozzle (14).

A related method is also provided.

## Description

### Technical field of the present invention

The present invention relates to bottom injection of cryogen into blenders or mixers for cooling, and more particularly to nozzle apparatus that introduce cryogenic substance into products, especially into food products, for chilling and/or freezing same.

### Technological background of the present invention

The bottom injection of cryogen into mixers for cooling food products, for example, are known. Such known bottom injection nozzles for cryogenic substances, such as for example liquid nitrogen (LIN), encounter difficulties when being used with wet products which are drawn into an orifice of the nozzle in communication with the food processing equipment, whereupon the wet food product is frozen upon exposure to the cryogen.

When such a situation occurs, the nozzle orifice will become restricted and eventually clogged. Unfortunately, it is extremely difficult to clear the nozzle, frequently requiring disassembly of same, and no further cooling cryogenic substance can be delivered to the mixer for chilling until the clog is removed.

Existing nozzle structure contributes to this deficiency. That is, known nozzles are made from either thick stainless steel, which transfers a large amount of heat from the mixture or blender wall and thereafter remains cold after an injection cycle of the cryogen until the mixing is complete. This type of stainless steel nozzle contributes to the clogging situation when the cryogenic substance, such as liquid nitrogen (LIN) for example, is exposed to the wet product in the blender or mixer.

Other nozzles are manufactured with a teflon sleeve which reduces the amount of heat transfer from the blender wall to the nozzle, but such nozzles are susceptible to migration of the food product between the sleeve and the housing and will therefore crack the nozzle due to thermal expansion and contraction from the cryogenic substance.

### Disclosure of the present invention: object, solution, advantages

Starting from the disadvantages and shortcomings as described above as well as taking the prior art as discussed into account, an object of the present invention is to overcome the limitations and problems that earlier apparatus and methods have experienced.

This object is accomplished by an apparatus comprising the features of claim 1 as well as by a method comprising the features of claim 12. Advantageous embodiments and expedient improvements of the present invention are disclosed in the respective dependent claims.

The present invention basically provides for an electrically heatable bottom injection nozzle apparatus which is not clogged from use of the cryogenic substance, in particular of the liquid nitrogen (LIN).

There is provided an electrically heated bottom injection nozzle apparatus which consists of a cryogen injection apparatus for injecting a cryogenic substance into a blender or mixer, including at least one nozzle constructed for being in fluid communication with an interior of the blender or mixer; and an electric heat transfer member, in particular an electric heat sink member, in contact with the at least one nozzle for electrically heating said nozzle, said electric heat transfer member being preferably constructed from copper.

According to an advantageous embodiment of the present invention, at least one electric cartridge heater connected to and operationally associated with the electric heat transfer member may be provided. A semi-conductor controlled rectifier (SCR), in particular a silicone controlled rectifier, may expediently be connected to the electric cartridge heater for delivering heating power to said electric cartridge heater.

In a favoured embodiment of the present invention, a controller, in particular a proportional-integral-derivative controller (PID controller), may be connected to the semi-conductor controlled rectifier (SCR) for controlling the heating power delivered from the semi-conductor controlled rectifier (SCR).

According to a preferred embodiment of the present invention, a thermocouple may be in communication with the semi-conductor controlled rectifier (SCR) and/or may be positioned at the electric heat transfer member, in particular at a first heat transfer portion of the electric heat transfer member, said first heat transfer portion, in particular first heat sink portion, advantageously being in contact with a wall of the blender or mixer.

The thermocouple may expediently be mounted in a cavity of said first heat transfer portion such that the thermocouple favourably is in facing contact with the wall of the blender or mixer when an enclosure or housing is mounted to said wall, said enclosure or housing
- preferably supporting the at least one nozzle,
- preferably having a space or chamber therein for receipt of the electric heat transfer member, and/or
- preferably comprising an exterior surface region having a shape conforming to a portion of the blender or mixer for being mounted flush thereto.

In an advantageous embodiment of the present invention, the thermocouple may shut down or stop the defrost operation of the injection nozzle apparatus when a desired set point temperature is reached, which can be for example above 0°C or 32°F.

According to an expedient embodiment of the present invention, the at least one nozzle, the electric heat transfer member, and the housing are constructed as an integral unit.

There is also provided herein a method for electrically heating a bottom injection nozzle to eliminate clogging of the nozzle, in particular for clearing a cryogen injection nozzle providing a cryogenic substance to a blender or mixer, which includes providing an electric heat sink to said injection nozzle upon conclusion of injecting the cryogenic substance to the blender or mixer, and transmitting power to the electric heat sink for warming the injection nozzle.

In a favoured embodiment of the present invention, there may be provided expelling any material from the injection nozzle for clearing said injection nozzle.

The transmission of power to the electric heat sink may preferably be ceased when a temperature of the warming of the injection nozzle exceeds for example 0°C (32°F); in this context or independently thereof, said warming temperature may advantageously be sensed.

In summary, the present embodiments include a low thermal mass straight bore (or expanding bore) nozzle with an integrated heating system which provides for rapid or quick warming or thawing of the nozzle, and therefore clearing of any product within the nozzle between injection cycles of cryogenic substance, such as liquid nitrogen (LIN), from the nozzle.

The construction of the present nozzle embodiments also eliminates the possibility of cracking of the nozzle because there is no internal sleeve for the nozzle used which could permit thermal expansion and contraction of any frozen product, in particular food product, or condensate between the nozzle body and the thermal sleeve.

### Brief description of the drawings

For a more complete understanding of the present embodiment disclosures and as already discussed above, there are several options to embody as well as to improve the teaching of the present invention in an advantageous manner. To this aim, reference may be made to the claims dependent on claim 1 as well as on claim 12; further improvements, features and advantages of the present invention are explained below in more detail with reference to particular and preferred embodiments by way of nonlimiting example and to the appended drawing figures taken in conjunction with the following description of exemplary embodiments, of which:
- FIG. 1: shows a perspective view of a cryogen injection nozzle embodiment of the present invention, said embodiment working according to the method of the present invention; and
- FIG. 2: shows a side view partially in cross-section of the injection nozzle embodiment of FIG. 1.

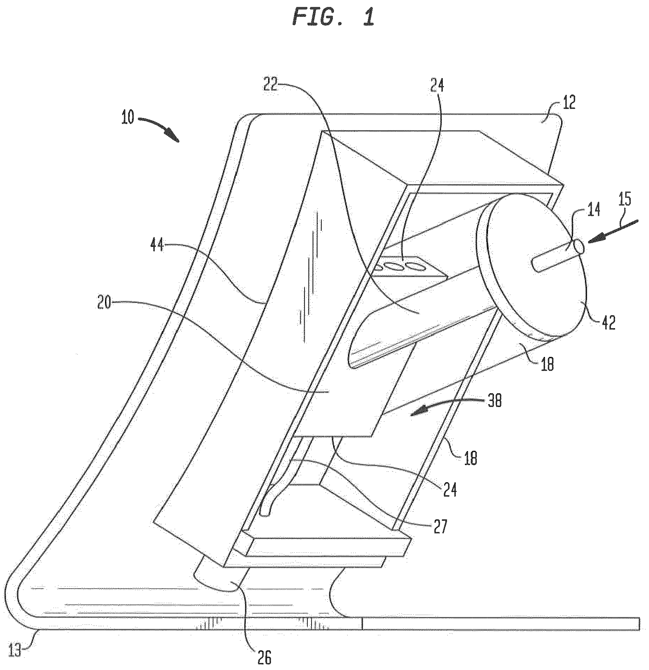

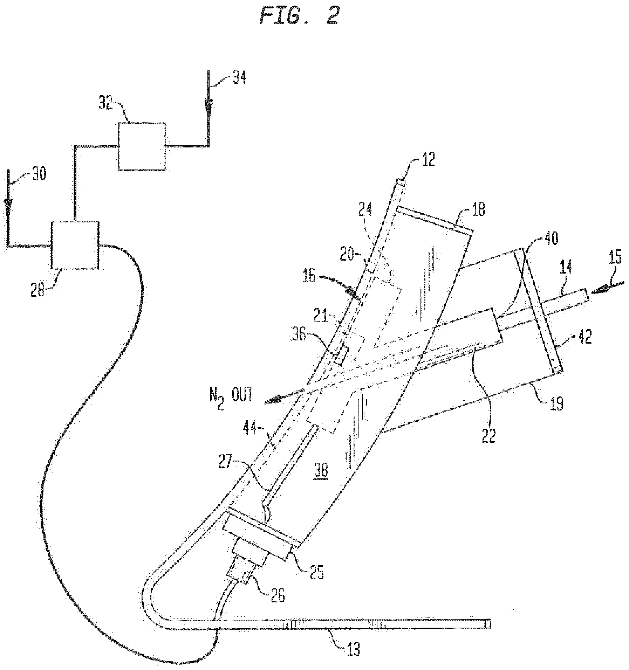

In the appended drawing figures, like equipment is labelled with the same reference numerals throughout the description of FIG. 1 and FIG. 2.

### Detailed description of the drawings; best way of embodying the present invention

Before explaining the inventive embodiments in detail, it is to be understood that the present invention is not limited in its application to the details of construction and arrangement of parts illustrated in the accompanying drawings, since the present invention is capable of other embodiments and being practiced or carried out in various ways. Also, it is to be understood that the phraseology or terminology employed herein is for the purpose of description and not of limitation.

Referring to FIG. 1 and FIG. 2, an electrically heated injection nozzle apparatus of an embodiment of the present invention is shown generally at 10 mounted to a wall 12 of a blender or mixer (not shown) in which food product (not shown) is disposed for being chilled. While food product is referred to for being treated by the injection nozzle 10, it is understood that other types of products can be treated with the present injection nozzle embodiment. The apparatus 10 is shown mounted near or at a bottom region 13 of the blender wall 12.

The injection nozzle apparatus 10 or apparatus comprises a nozzle or nozzle portion 14 for introducing a cryogenic substance, such as liquid nitrogen (LIN), represented by an arrow 15 through the nozzle 14 into the blender, a heat sink member 16, and an enclosure or housing 18.

The nozzle 14 can be either a straight bore stainless steel tube or a machined steel tube with an expanding bore, wherein a diameter of the bore increases along the flow path in the direction of the wall 12. The nozzle 14 is constructed from a material that has a low thermal mass.

The heat sink member 16 is used to transfer heat to the blender wall 12 and the nozzle 14. The heat sink member 16 is constructed with a first heat sink portion 20 for the blender wall 12 and a second heat sink portion 22 for the nozzle 14. The first and second heat sink portions 20, 22 may also be formed as an integral unit. The heat sink member 16 is used for transferring heat into the blender wall 12 and to the nozzle 14.

As shown in FIG. 1 and in FIG. 2, the heat sink member 16, which includes the first and second heat sink portions 20, 22, can be constructed from copper, and the second portion 22 surrounds and is in direct contact with a substantial area of the nozzle 14. The first heat sink portion 20 is in direct contact with the blender wall 12.

Electric cartridge heaters 24 are mounted to or embedded in the heat sink member 16 and connected to a conduit connection 26 at a sidewall of the enclosure 18. Usually, such sidewall will be at or near a bottom 25 of the enclosure 18.

Electrical connectors 27 interconnect the heat sink member 16 with the conduit connection 26. The conduit connection 26 is wired to a semi-conductor controlled rectifier (SCR) 28, in particular to a silicone controlled rectifier, as shown in FIG. 2, which conducts the electrical current to the heat sink member 16.

Electric power 30 shown in FIG. 2 is provided to the SCR 28. A controller or a proportional-integral-derivative controller (PID controller) 32 is connected to the SCR 28 and receives input 34 for defrosting or thawing with the apparatus 10.

That is, the electric cartridge heaters 24 are powered by the SCR 28 and the PID controller 32, so that the power can be regulated to defrost or thaw the blender wall 12 and the nozzle 14 in a select amount of time. For example, rapid defrost would mean that increased power will be applied to the heat sink member 16, while a permissible longer duration of defrost will require less power.

A thermocouple 36 is positioned at an exterior surface of the first heat sink portion 20 as shown in FIG. 2. The thermocouple 36 can be mounted in a cavity 21 of the portion 20 such that the thermocouple is in facing contact with the wall 12 when the enclosure 18 is mounted to the blender wall. The thermocouple 36 will shut down or stop the defrost operation of the apparatus 10 when a desired set point temperature is reached, which can be for example above 0°C or 32°F.

The second heat sink portion 22 is sized and shaped with a bore 40 therethrough which is constructed to receive the nozzle 14 to be extended through the second heat sink portion 22 and the blender wall 12 for opening into the blender. The enclosure 18 is provided with a cylindrical portion 19 extending therefrom and having an open end to which a cap 42 is removably mounted.

The enclosure or housing 18 is constructed and arranged to protect the nozzle 14, heat sink member 16 and the electrical cartridge heaters 24 from external impacts and water sprays that may occur in a production facility where the blender is being used. As shown in FIG. 1 and in FIG. 2, the enclosure 18 includes an internal space 38 or chamber of sufficient volume to support the first and second heat sink portions 20, 22, the nozzle 14, and the electric cartridge heaters 24 therein.

The enclosure or housing 18 has a sidewall at least a portion of which is open-sided at 44, such that the first heat sink portion 20 functions as a sidewall portion for the enclosure or housing 18. The thermocouple 36 as shown in FIG. 2 is positioned for contacting the wall 12 as discussed above, and covered as well when the enclosure 18 is mounted or seated against the wall 12 shown generally at 44.

The enclosure or housing 18 is contoured so that the sidewall will fit flush with an exterior surface on the blender wall 12, as shown in particular in FIG. 2.

An alternate embodiment of the apparatus 10 provides the nozzle 14, the heat sink member 16, the enclosure 18 with conduit connection 26, and the thermocouple 36 as an integral unit.

The nozzle portion 14 may be constructed from stainless steel; the heat sink member 16 may be constructed from copper or any other highly conductive material; and the enclosure or housing 18 may be constructed from stainless steel or plastic.

The injection nozzle apparatus 10 of the embodiment shown in FIG. 1 and in FIG. 2 permits the nozzle 14 to be easily cleaned, because the only element of the nozzle 14 exposed to an interior of the blender is an interior of the nozzle portion 14. Therefore, hot water or other cleaning solutions can be sprayed through the nozzle portion 14 for easy cleaning without having to disassemble the injection nozzle 10.

In operation with the actual blender or mixer (not shown), a batch of food product, such as for example ground meat with ingredients therein, is placed in the blender or mixer which is started such that internal blades (not shown) of the blender or mixer mix the food product and ingredients. It is required to chill the meat during the blending operation and therefore, cryogen such as liquid nitrogen (LIN) is injected into the blender or mixer through the injection nozzle 14.

That is, the liquid nitrogen (LIN) 15 is injected through the nozzle 14 during which heat is transferred from the wall 12 via conduction with the nozzle 14 which also has its temperature reduced to a temperature substantially similar to that of the liquid nitrogen (LIN).

Minimal heat is transferred between the wall 12 and the nozzle 14 due to a low thermal mass of the nozzle portion 14. When a desired, reduced temperature of the meat is obtained, injection of the liquid nitrogen (LIN) 15 is stopped and the meat is removed from the blender or mixer.

The controller 32 actuates the SCR 28 for delivering power to the electric cartridge header 24 mounted or imbedded in the heat sink member 16 to warm the first and second heat sink portions 20, 22 to effectively warm and thaw the blender wall 12 and the nozzle 14. Any frozen meat or water trapped within and clogging the nozzle portion 14 is warmed and the nozzle 14 can be blown out with a high pressure nitrogen gas prior to the next operating batch being disposed in the blender.

The high pressure nitrogen gas will easily discharge any matter from the nozzle into the blender. Since nitrogen is used to dislodge any material in the nozzle 14, and the next batch will be of similar composition of meat and other ingredients, there is no contamination of the next batch of the product being processed in the blender. The construction of the injection nozzle apparatus 10 permits clean-in-place (CIP) of the nozzle portion 14 without removal or disassembly of the apparatus.

It will be understood that the embodiments described herein are merely exemplary, and that one skilled in the art may make variations and modifications without departing from the spirit and scope of the present invention. All such variations and modifications are intended to be included within the scope of the present invention as described and claimed herein. Further, all embodiments disclosed are not necessarily in the alternative, as various embodiments of the present invention may be combined to provide the desired result.

### List of reference numerals

- 10: apparatus, in particular injection nozzle apparatus
- 12: wall of blender or of mixer
- 13: bottom or bottom region of wall 12
- 14: nozzle or nozzle portion, in particular injection nozzle or injection nozzle portion, for example straight bore stainless steel tube or machined steel tube with expanding bore
- 15: cryogenic substance, in particular liquid cryogen, in particular liquid nitrogen (LIN)
- 16: heat transfer member, in particular heat sink member
- 18: enclosure or housing
- 19: cylindrical portion of enclosure or housing 18
- 20: first heat transfer portion, in particular first heat sink portion, of heat transfer member 16
- 21: cavity of first heat transfer portion 20
- 22: second heat transfer portion, in particular second heat sink portion, of heat transfer member 16
- 24: electric cartridge heater
- 25: bottom of enclosure 18
- 26: conduit connection
- 27: electrical connector between heat transfer member 16 and conduit connection 26
- 28: semi-conductor controlled rectifier (SCR), in particular silicone controlled rectifier
- 30: power, in particular electric power
- 32: controller, in particular proportional-integral-derivative controller (PID controller)
- 34: input, in particular for defrosting or thawing with apparatus 10
- 36: thermocouple
- 38: space or chamber, in particular internal space or chamber, of enclosure or housing 18
- 40: bore
- 42: cap
- 44: exterior surface region, in particular sidewall, for example open-sided portion of sidewall, of enclosure or housing 18

## Claims

1. A cryogen injection apparatus (10) for injecting a cryogenic substance (15) into a blender or mixer, comprising:
- at least one nozzle (14) constructed for being in fluid communication with an interior of the blender or mixer; and
- an electric heat transfer member (16), in particular an electric heat sink member, in contact with the at least one nozzle (14) for electrically heating said at least one nozzle (14).

2. The apparatus according to claim 1, further comprising at least one electric cartridge heater (24) connected to and operationally associated with the electric heat transfer member (16).

3. The apparatus according to claim 2, further comprising a semi-conductor controlled rectifier (28), in particular a silicone controlled rectifier, connected to the electric cartridge heater (24) for delivering heating power to said electric cartridge heater (24).

4. The apparatus according to claim 3, further comprising a controller, in particular a proportional-integral-derivative controller (PID controller), connected to the semi-conductor controlled rectifier (28) for controlling the heating power delivered from the semi-conductor controlled rectifier (28).

5. The apparatus according to claim 3 or 4, further comprising a thermocouple (36) mounted to the electric heat transfer member (16) and in communication with the semi-conductor controlled rectifier (28).

6. The apparatus according to at least one of claims 1 to 5, further comprising an enclosure or housing (18) supporting the at least one nozzle (14) and having a space or chamber (38) therein for receipt of the electric heat transfer member (16).

7. The apparatus according to claim 6, wherein the electric heat transfer member (16) disposed in the space or chamber (38) comprises a portion (20) in contact with a wall (12) of the blender or mixer.

8. The apparatus according to claim 6 or 7, wherein the enclosure or housing (18) comprises an exterior surface region (44) having a shape conforming to a portion of the blender or mixer for being mounted flush thereto.

9. The apparatus according to at least one of claims 6 to 8, wherein the at least one nozzle (14), the electric heat transfer member (16), and the enclosure or housing (18) are constructed as an integral unit.

10. The apparatus according to at least one of claims 1 to 9, wherein the electric heat transfer member (16) comprises a portion (20) in contact with a wall (12) of the blender or mixer.

11. The apparatus according to at least one of claims 1 to 10, wherein the electric heat transfer member (16) is constructed from copper.

12. A method of clearing a cryogen injection nozzle (14) providing a cryogenic substance (15) to a blender or mixer, comprising:
- providing an electric heat sink (16) to said injection nozzle (14) upon conclusion of injecting the cryogenic substance (15) to the blender or mixer; and
- transmitting power (30) to the electric heat sink (16) for warming the injection nozzle (14).

13. The method according to claim 12, further comprising expelling any material from the injection nozzle (14) for clearing said injection nozzle (14).

14. The method according to claim 12 or 13, further comprising sensing when a temperature of the warming exceeds 0°C (32°F).

15. The method according to at least one of claims 12 to 14, further comprising cessation of the transmitting of power (30) when the temperature exceeds 0°C (32°F).
